# EUROPÄISCHE PATENTSCHRIFT

(11) **EP 1 238 324 B1**
(45) Veröffentlichungstag und Bekanntmachung des Hinweises auf die Patenterteilung: **22.10.2003**
(21) Anmeldenummer: 00963925.3
(22) Anmeldetag: 23.08.2000
(51) Int. Cl.: G06F 1/16, G06F 15/02, H04M 1/02

(54) **KOMMUNIKATIONS- UND/ODER DATENVERARBEITUNGS-KLEINGERÄT MIT BILDWERFER**
SMALL COMMUNICATIONS AND/OR DATA PROCESSING APPARATUS WITH PROJECTOR
PETIT APPAREIL DE COMMUNICATION ET/OU DE TRAITEMENT DE DONNEES AVEC PROJECTEUR

(30) Priorität: 27.08.1999 DE 19940757
(43) Veröffentlichungstag der Anmeldung: 11.09.2002
(73) Patentinhaber: SIEMENS AKTIENGESELLSCHAFT, 80333 München (DE)
(72) Erfinder: NEVERMANN, Peter, 92129 San Diego (CA)
(86) Internationale Anmeldenummer: DE0002871
(87) Internationale Veröffentlichungsnummer: WO01016676

(56) Entgegenhaltungen:
- EP-A- 0 782 307
- EP-A- 0 818 764
- EP-A- 0 888 005

## Beschreibung

Die Erfindung betrifft ein Kommunikations- und/oder Datenverarbeitungs-Kleingerät mit einer in das Gerät integrierten Anzeigeeinrichtung nach dem Obergriff des Anspruchs 1, wie es beispielsweise aus der EP-A-888005 bekannt ist.

Unter dem Begriff Kommunikations- bzw. Datenverarbeitungs-Kleingerät werden dabei im folgenden Geräte wie Mobiltelefone, schnurlose Telefone, PDA's, Organizer, Palmtops oder dergleichen verstanden, die eine Größe aufweisen, daß sie bei der Bedienung in einer Hand gehalten werden können. Hierunter können jedoch auch kleinere Geräte fallen, die nicht als mobile Geräte mitgetragen werden, sondern fest installiert sind, beispielsweise kleinere Tischtelefone.

Derartige Kleingeräte weisen häufig eine Anzeigeeinrichtung in Form eines integrierten Displays auf, auf welchem die vom Gerät anzuzeigenden Informationen dargestellt werden. Darüber hinaus dient dieses Display üblicherweise zur Steuerung des Geräts. Bei allen diesen elektronischen Kleingeräten, die mit einem Benutzer über eine Anzeige kommunizieren, gibt es zwei gegenläufige Forderungen. Zum einen soll das Gerät selbst so klein wie möglich sein, zum anderen soll das Anzeigeelement, d. h. das Display, so groß wie möglich sein. Bei den bisher üblichen Displays besteht jedoch eine zwangsläufige Grenze darin, daß die Anzeigefläche nicht größer sein kann als die Geräteoberfläche.

Um dieses Problem zu umgehen, verwenden viele Geräte Schnittstellen, mit denen das Gerät an ein stationäres Anzeigegerät, z. B. einen Bildschirm, angeschlossen werden kann. Dies hat zum einen den Nachteil, daß bei der Verwendung eines solchen Bildschirms der Vorteil der Beweglichkeit verlorengeht, zum anderen steht nicht an jeder Stelle ein entsprechender Bildschirm zur Verfügung. Bei stationären Kleingeräten erhöht ein externer Bildschirm den gesamten Platzbedarf des Geräts inklusive Anzeigesystem, so daß hier anstelle eines Kleingeräts gleich ein größeres Gerät mit einem entsprechend großem Display verwendet werden könnte.

Aus der EP 818 764 A geht ebenfalls ein Kommunikations- oder Datenverarbeitungs-Kleingerät hervor, wobei in das Gerät ein Anzeigeeinrichtung integriert ist die einen Bildwerfer aufweist. In der EP 782 307 A wird ein Gerät mit einem Bildwerfer beschrieben, bei dem eine Lichtquelle von einer Leuchtdiode gebildet wird.

Es ist Aufgabe der vorliegenden Erfindung, eine Alternative zu diesem Stand der Technik zu schaffen.

Diese Aufgabe wird bei den eingangs genannten Kommunikationsund/oder Datenverarbeitungs-Kleingerät durch die kennzeichnenden Merkmale des Anspruchs 1 gelöst.

Bei einem solchen in das Gerät integrierten aktiven Anzeigesystem in Form eines Bildwerfers wird einfach ein ebener reflektierender Bereich, beispielsweise ein Blatt Papier auf einem Tisch, als Anzeigefläche genutzt. Der Vorteil liegt darin, daß eine derartige passive Anzeigefläche nahezu überall zur Verfügung gestellt werden kann. Die Anzeigefläche kann dabei wesentlich größer sein als die Oberfläche des Geräts, das heißt, das Gerät kann beispielsweise eine Anzeigefläche mit der Größe eines Laptops aufweisen, wogegen das Gerät selbst deutlich kleiner als ein Laptop ist. Hierbei wird keinerlei stationäre externe Anzeige wie ein externer Bildschirm oder ähnliches gebraucht. Es wird somit auch keine Energieversorgung für einen größeren Bildschirm benötigt. Die Anzeigefläche kann mit einfachen Mitteln immer wieder neu aufgebaut werden und muß nicht mittransportiert werden.

Der Bildwerfer weist eine Lichtquelle zur Erzeugung eines Lichtstrahls sowie eine Bewegungseinrichtung auf, welche die Lichtstrahlrichtung in Abhängigkeit von einem Steuersignal verändert.

Auf diese Weise kann der Lichtstrahl in X- und Y-Richtung über der Anzeigefläche bewegt werden. Durch entsprechende Ansteuerung der Lichtquelle, beispielsweise über eine Pulsweitenmodulation, wird die Helligkeit des Lichtstrahls verändert. Bei hinreichender Geschwindigkeit der Bewegung des Lichtstrahls und der Helligkeitsveränderung entsteht durch die Trägheit des menschlichen Auges der Eindruck eines flächenhaften Bildes.

Die Bewegungseinrichtung kann hierbei so ausgestaltet sein, daß die Lichtquelle selber bewegt wird und somit die Lichtstrahlrichtung verändert wird. Vorzugsweise handelt es sich jedoch um eine Ablenkeinrichtung, welche den Lichtstrahl in Abhängigkeit von dem Steuersignal ablenkt.

Diese Ablenkeinrichtung weist vorteilhafterweise einen Spiegel auf, wobei die Ablenkeinrichtung in X- und die Ablenkeinrichtung in Y-Richtung getrennt aufgebaut sein können. Das heißt, daß der Strahl beispielsweise zunächst an einem Spiegelsystem in X-Richtung abgelenkt wird und auf einen Spiegel reflektiert wird, der für eine Ablenkung in Y-Richtung sorgt. Es kann sich jedoch prinzipiell auch um einen Spiegel handeln, der in zwei Richtungen verkippbar ist.

Um die zur Erzeugung eines Bildes notwendigen Geschwindigkeiten der Lichtstrahlablenkung zu erreichen, gibt es verschiedene Möglichkeiten.

Bei einem besonders bevorzugten Ausführungsbeispiel weist eine der Ablenkeinrichtungen mehrere Spiegel auf, die auf dem Umfang eines um seine Symmetrieachse drehbar gelagerten Rotationskörpers hintereinander angeordnet sind. Dies bietet sich beispielsweise an, um den Lichtstrahl sehr schnell in einer Richtung zeilenweise über die Anzeigefläche zu bewegen und am Ende der Anzeigefläche bzw. der jeweiligen Zeile wieder an den Anfangspunkt zurückzuspringen. Eine derartige Ablenkeinrichtung mit einem schnell rotierenden Rotationskörper kann zur Platzersparung gleichzeitig als Vibrationseinrichtung eingesetzt werden, indem beispielsweise die Rotationsrichtung des Rotationskörpers schnell geändert wird.

Eine weitere bevorzugte Alternative ist eine Ablenkeinrichtung mit einem Chip mit integriertem Ablenkelement. Hierbei kann es sich um eine Art beweglichen Spiegel auf einem Halbleiter-Chip handeln.

Weiterhin weist die Bildwerfereinrichtung vorteilhafterweise optische Elemente, beispielsweise Linsen, Hohlspiegel etc., zur Formung des Lichtstrahls bzw. des vom Strahl erfaßbaren Strahlbereichs auf. Ein derartiges optisches Element sitzt vorzugsweise kurz vor dem Ausgang des Lichtstrahls aus dem Gehäuse des Geräts, um den Strahlbereich so aufzuweiten, daß ein hinreichend großer Bereich auf der Anzeigefläche erfaßt wird.

Bei der Lichtquelle handelt es sich vorzugsweise um einen Halbleiter-Laser, da dieser relativ klein ist und einen Lichtstrahl mit kleiner Divergenz erzeugt. Prinzipiell kann es sich aber auch um eine Lichtquelle mit einer Leuchtdiode oder ahnlichem handeln.

Es ist weiterhin möglich, daß das Gerät mehrere Lichtquellen aufweist, die beispielsweise Lichtstrahlen mit unterschiedlichen Farben erzeugen. Bei der Verwendung von Lichtquellen mit den drei Grundfarben rot, grün und blau kann durch entsprechende Mischung jede beliebige Farbe erzeugt werden, so daß auf diese Weise auch Farbbilder qualitativ gut dargestellt werden können.

Sehr viele Bauteile des Bildwerfers können aus nichtleitendem Material hergestellt sein oder bestehen, wie z. B. Linsen aus Kunststoff oder Glas, ohnehin aus nichtleitendem Material. Zudem muß der Lichtstrahl eine gewisse Strecke innerhalb des Gerats zurucklegen, um auch mit kleinen Ablenkwinkeln in den Ablenkeinrichtungen eine hinreichend große Ablenkstrecke auf der Anzeigefläche zu erreichen. Es bietet sich daher aus Platzersparnisgründen an, für den Bildwerfer Raumbereiche zu nutzen, in denen sich keine oder im Vergleich zu dem Volumen der betreffenden Bereiche nur kleine leitfähige Teile befinden dürfen, wie dies zum Beispiel bei dem Antennenvolumen eines Mobilfunkgeräts der Fall ist. Es wird daher der Lichtstrahl durch die Antennenbereiche geführt, wobei sich weiterhin zumindest Teile des Bildwerfers innerhalb des Antennenbereichs des Geräts befinden können.

Beim ersten Ausführungsbeispiel weist das Gerät eine integrierte Antenne mit zwei Metallflächen auf. Hier sind zumindest Teile des Bildwerfers zwischen den beiden Metallflächen angeordnet. Bei diesen Teilen kann es sich beispielsweise um eine Zerstreuungslinse oder um einen kleineren Spiegel handeln, dessen verspiegelte Oberfläche als leitendes Teil sehr klein gegenüber dem Gesamtvolumen der Antenne ist. Des weiteren kann auch die Lichtquelle selbst im Antennenvolumen angeordnet sein, da der größte Teil einer solchen Lichtquelle bis auf den Halbleiter-Laserchip aus nichtleitendem Material gefertigt werden kann.

Bei einem alternativen bevorzugten Ausführungsbeispiel weist das Gerät eine hohle Stabantenne auf. Hierbei sind einige Teile des Bildwerfers, beispielsweise eine Zerstreuungslinse und ein konvexer Spiegel, in dem Innenraum der Stabantenne angeordnet.

Das Gerät weist weiterhin vorteilhafterweise einen Ständer auf, mit dem das Gerät auf einer Oberfläche aufgestellt werden kann, so daß eine Austrittstelle des Lichtstrahls aus dem Gehäuse bzw. aus der Antenne des Geräts in einer vorgegebenen Position über der Oberfläche angeordnet ist. Durch einen solchen Ständer wird gewährleistet, daß das Gerät zur Erzeugung eines klaren Bilds ruhig auf dem Tisch steht.

Es ist weiterhin von Vorteil, wenn das Gerät zusätzlich noch eine zweite Anzeigeeinrichtung in Form eines in das Gerät integrierten herkömmlichen Displays aufweist. Dieses Display kann alternativ verwendet werden, wenn keine ruhige Tischfläche, beispielsweise bei Verwendung des Geräts unterwegs im Zug, beim Autofahren, beim Laufen oder dergleichen, benutzt wird.

Die Erfindung wird im folgenden unter Hinweis auf die beigefügten Zeichnungen anhand von Ausführungsbeispielen näher erläutert. Es zeigen:
Figur 1 einen schematischen seitlichen Längsschnitt durch ein Mobiltelefon mit einem erfindungsgemäßen Bildwerfer gemäß einem ersten Ausführungsbeispiel,
Figur 2 einen schematischen Schnitt von oben durch ein Mobiltelefon gemäß Figur 1,
Figur 3 einen schematischen seitlichen Längsschnitt durch ein Mobiltelefon mit einer integrierten Antenne mit einem erfindungsgemäßen Bildwerfer gemäß einem zweiten Ausführungsbeispiel,
Figur 4 einen schematischen Schnitt von oben auf ein Mobiltelefon wie in Figur 3, jedoch mit einer außerhalb des Antennenbereichs liegenden Lichtquelle,
Figur 5 eine vergrößerte Darstellung des Antennenbereichs des Geräts aus Figur 3,
Figur 6 eine schematische Darstellung der Erzeugung eines Bildes auf der Anzeigefläche.

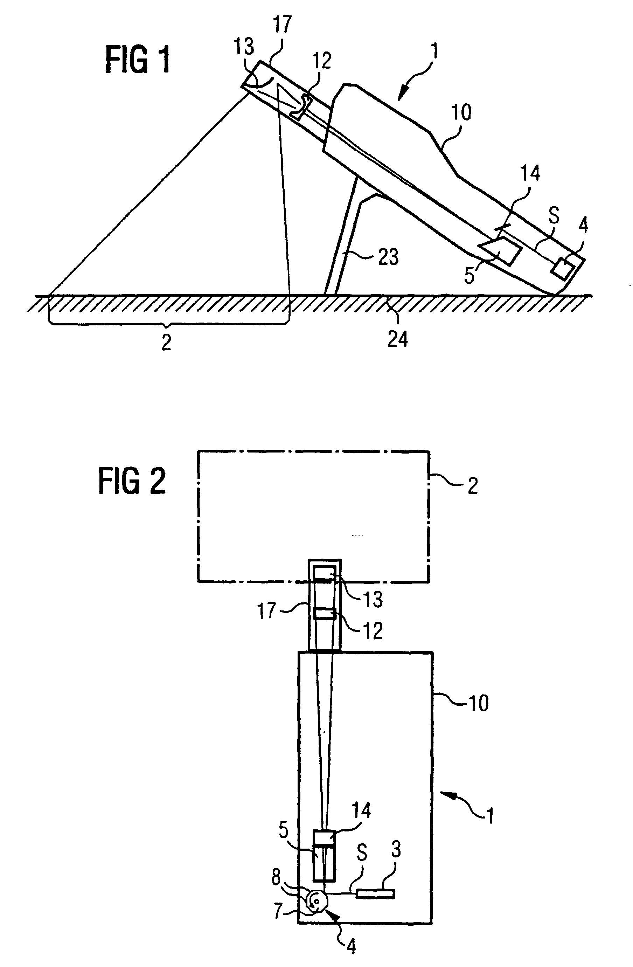

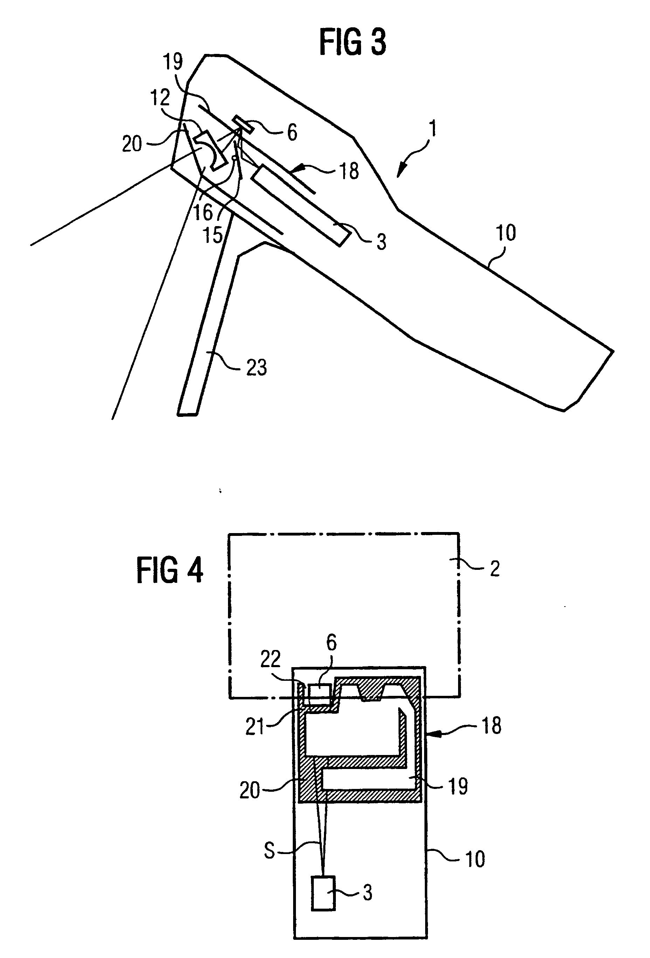

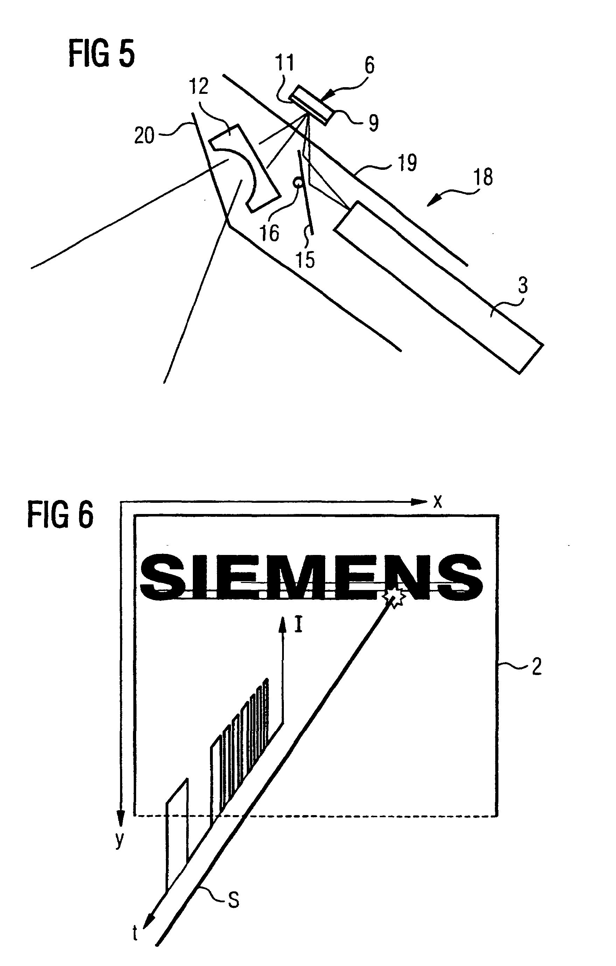

In den Figuren wird die Erfindung jeweils anhand eines Mobiltelefons 1 dargestellt, wobei es sich bei dem Gerät gemäß den Figuren 1 und 2 um ein Mobiltelefon 1 mit einer Stabantenne 17 handelt und bei den Geräten gemäß den Figuren 3 und 4 um Mobiltelefone 1 mit einer integrierten Antenne 18 mit zwei Metallflächen 19, 20.

Von den Mobiltelefonen 1 sind hierbei jeweils nur die relevanten Teile der Antenne 17, 18 und der Bildwerfereinrichtung sowie das Gehäuse 10 dargestellt. Selbstverständlich weisen diese Telefone 1 alle üblichen Merkmale eines Mobiltelefons wie Tastatur, Display, Schnittstellen sowie die üblichen im Mobiltelefon befindlichen elektronischen Bauteile auf.

Bei allen in den Ausführungsbeispielen dargestellten Geräten 1 wird das Bild jeweils nach dem in Figur 6 erläuterten Prinzip auf der Anzeigefläche 2, beispielsweise auf einer ebenen Tischoberfläche 24, erzeugt. Dabei wird ein Lichtstrahl unter Variation der Helligkeit sehr schnell in X-und Y-Richtung über die Anzeigefläche 2 bewegt. Die X-Richtung entspricht hierbei einer Bewegung innerhalb einer Bildzeile, die Y-Richtung innerhalb einer Spalte. Bei hinreichender Geschwindigkeit entsteht durch die Trägheit des menschlichen Auges der Eindruck eines flächenhaften Bildes.

Wie die in Figur 6 neben dem Strahl S dargestellte Grafik zeigt, wird die effektive Helligkeit des Lichtstrahls S durch eine Pulsweitenmodulation gesteuert. Das heißt, in Abhängigkeit von der Zeit t wird entweder ein Lichtstrahl S mit der vollen Intensität I erzeugt oder der Lichtstrahl S wird vollständig ausgeblendet.

Der Lichtstrahl S sollte hierbei eine möglichst geringe Divergenz aufweisen. Daher wird der Lichtstrahl S bei den dargestellten Ausführungsbeispielen mittels einer Lichtquelle 3 mit einem Halbleiter-Laser erzeugt.

Bei dem ersten Ausführungsbeispiel gemäß den Figuren 1 und 2 befindet sich die Lichtquelle 3 im unteren, der Antenne 17 gegenüberliegenden Teil des Gehäuses 10 des Mobiltelefons 1.

Von dieser Lichtquelle 3 aus wird der Lichtstrahl S auf eine Ablenkeinrichtung 4 gerichtet, welche den Strahl S sehr schnell in X-Richtung, d. h. innerhalb einer Zeile, ablenkt und am Ende der Zeile wieder an den Anfang einer Zeile zurückspringt. Hierzu ist die X-Ablenkeinrichtung 4 in Form eines achteckigen Rotationskörpers 7 aufgebaut, dessen acht Seitenflächen mit Spiegeln 8 versehen sind. Bei einer Verdrehung des Rotationskörpers 7 um die Rotationsachse wird der jeweilige Spiegel 8 verkippt und darüber der Strahl in X-Richtung abgelenkt. Wenn das Ende des jeweiligen Spiegels 8 erreicht ist, trifft der Lichtstrahl automatisch auf den nachfolgenden Spiegel 8, wodurch der Strahl wieder sofort an den Anfang einer Zeile springt.

Über einen weiteren Spiegel 14 wird der Lichtstrahl S dann auf eine Y-Ablenkeinrichtung 5 mit einem Kippspiegel geleitet. Diese Y-Ablenkeinrichtung 5 ist mit der X-Ablenkeinrichtung 4 so synchronisiert, daß immer bei dem Wechsel von einem Spiegel 8 auf einen nachfolgenden Spiegel die Y-Ablenkeinrichtung 5 so verstellt wird, daß der Lichtstrahl S auf der Anzeigefläche 2 um eine Zeile nach unten verschoben wird. Bei Erreichen der letzten Zeile wird der Spiegel der Y-Ablenkeinrichtung 5 automatisch wieder in die Ausgangsposition zurückgekippt.

Von der Y-Ablenkeinrichtung 5 aus wird der Lichtstrahl S in eine hohle Stabantenne 17 geleitet, in der sich eine Kunststoff-Zerstreuungslinse 12 befindet, welche den Strahlbereich aufweitet. Der Strahl S fällt dann am Ende der Antenne 17 auf einen konvexen Spiegel 13, welcher den Strahlbereich noch einmal auf die endgültige, für die Anzeigefläche 2 benötigte Größe aufweitet. Von dem konvexen Spiegel 13 wird der Lichtstrahl S dann durch eine in den Figuren nicht dargestellte Austrittsöffnung aus der Unterseite der Antenne 17 auf die Tischoberfläche 24 reflektiert. Die Austrittsöffnung ist mit einem Fenster versehen.

Um Platz zu sparen, wird die X-Ablenkeinrichtung 4 mit dem Rotationskörper 7 auch gleichzeitig als Vibrationsalarmvorrichtung eingesetzt, indem der Rotationskörper 7 in Rotation versetzt wird, wobei sehr schnell die Drehrichtung periodisch geändert wird.

An der Unterseite des Gehäuses 10 des Mobiltelefons 1 befindet sich ein aufklappbarer Ständer 23, mit dem das Telefon 1 so auf der Tischoberfläche 24 positioniert wird, so daß die Austrittsöffnung in der Antenne 17 in einer vorgegebenen Position über der Tischoberfläche 24 angeordnet ist, in der auf der Tischoberfläche 24 ein hinreichend scharfes Bild der vorgegebenen Größe erzeugt wird.

Bei dem zweiten Ausführungsbeispiel gemäß Figur 3 weist das Mobiltelefon 1 eine integrierte Antenne 18 mit zwei übereinander angeordneten Metallflächen 19, 20 auf. Auch hier wird wieder eine Lichtquelle 3 mit einem Halbleiter-Laser verwendet, um den Lichtstrahl S zu erzeugen. Die Lichtquelle 3 befindet sich hier zum Teil im Antennenvolumen, d. h. zwischen den Metallflächen 19, 20. Dies ist möglich, da ein Großteil der Lichtquelle 3 aus nichtleitendem Material besteht. Lediglich der Halbleiter-Laser selber weist metallische Teile auf. Diese sind jedoch so klein, daß sie im Antennenvolumen nicht stören.

Bei dem Ausführungsbeispiel gemäß Figur 4 handelt es sich um ein zu dem Ausführungsbeispiel gemäß Figur 3 identisches Telefon 1, wobei jedoch die Lichtquelle 3 im unteren Teil des Gehäuses 10 außerhalb des Antennenvolumens untergebracht ist.

Der Strahlengang mit den einzelnen Komponenten der Ablenkeinrichtung gemäß den Figuren 3 und 4 ist in Figur 5 vergrößert dargestellt. Der Lichtstrahl S fällt hier zunächst auf einen Spiegel 15. Auch dieser Spiegel 15 befindet sich im Antennenvolumen. Er ist über eine Halterung 16 dort fixiert.

Die Halterung 16 und der größte Teil des Spiegels 15 sind aus nichtleitendem Material. Lediglich die spiegelnde Oberfläche des Spiegels 15 besteht aus einem Metall. Hierbei handelt es sich jedoch ebenfalls um eine so kleine Komponente, daß sie im gesamten Antennenvolumen keinerlei störende Auswirkungen hat.

Vom Spiegel 15 aus wird der Lichtstrahl durch eine Öffnung 21 in der oberen Metallfläche 19 der Antenne 18 auf eine außerhalb des Antennenvolumens befindliche Ablenkeinrichtung 6 geleitet. Bei dieser Ablenkeinrichtung 6 handelt es sich um einen Halbleiter-Chip 9 mit einer Spiegelfläche 11. Der Halbleiter-Chip 9 befindet sich auf einer nicht dargestellten, in Mobiltelefonen ohnehin üblicherweise an dieser Position befindlichen Platine, auf der sich auch die übrigen elektronischen Komponenten des Mobiltelefons 1 befinden. Die Spiegelfläche 11 dieses Chips 9 ist in zwei Richtungen veränderbar, so daß die Ablenkeinrichtung 6 gleichzeitig in X- und in Y-Richtung ablenken kann. Es kann hier jedoch auch nur in eine Richtung abgelenkt werden, wobei die Ablenkung in der zweiten Richtung beispielsweise durch eine Bewegung der Lichtquelle 3 selbst erfolgt.

Von der Ablenkeinrichtung 6 wird der Strahl zurück durch die Öffnung 21 in der Metallplatte 19 auf eine innerhalb des Antennenvolumens befindliche Zerstreuungslinse 12 aus Kunststoff oder Glas reflektiert, welche den Strahlbereich auf das nötige Maß aufweitet. Von der Linse 12 aus gelangt der Strahl S dann durch eine in der unteren Metallfläche 20 befindliche Austrittsöffnung 22 aus dem Antennenvolumen heraus. Der Lichtstrahl S wird dann durch eine in den Figuren 3 und 4 nicht dargestellte, mit einem Fenster versehene Öffnung im Gehäuse 10 des Mobiltelefons 1 nach außen auf die Tischoberfläche 24 geworfen.

Auch dieses Telefon 1 gemäß den Figuren 3 und 4 weist einen Ständer 23 auf, mit dem das Telefon entsprechend über der Tischoberfläche 24 positioniert wird.

Zusätzlich zu dem erfindungsgemäßen Bildwerfer weisen die Mobiltelefone 1 bei den beschriebenen Ausführungsbeispielen ein in den Figuren nicht dargestelltes, übliches Display auf. Auf diesem Display kann die Information wie gewohnt angezeigt werden.

Dabei kann sowohl gleichzeitig eine Anzeige durch den Bildwerfer auf einer Tischoberfläche als auch auf dem integrierten Display erfolgen. Es ist aber außerdem möglich, durch entsprechende Tasten bzw. mit Hilfe entsprechender über eine Menusteuerung aktivierbare und deaktivierbare Funktionen, wahlweise nur das integrierte Display oder den Bildwerfer zu verwenden. Selbstverständlich ist es auch möglich, daß auf dem integrierten Display und durch den Bildwerfer unterschiedliche Bilder dargestellt werden. So könnte beispielsweise auf dem integrierten Display das Menü zur Steuerung des Geräts dargestellt werden und gleichzeitig bei einem Bildtelefon durch den Bildwerfer das von dem Gesprachsparther übertragene Bild.

Zur Steuerung des Bildwerfers können im Prinzip viele Kompenenten, die zur Steuerung des herkömmlichen Displays verwendet werden, mitbenutzt werden. Es muß lediglich eine entsprechende Schnittstelle zur Verfügung stehen, welche die vom Treiber an das Display gesendeten Steuersignale in die Steuersignale für die Ablenkeinrichtung und für die Lichtquelle umsetzt.

## Patentansprüche

1. Kommunikations- und/oder Datenverarbeitungs-Kleingerät (1) mit einer in das Gerät integrierten Anzeigeeinrichtung, wobei die Anzeigeeinrichtung einen Bildwerfer aufweist, und wobei der Bildwerfer eine Lichtquelle (3) zur Erzeugung eines Lichtstrahls (S) und eine Bewegungseinrichtung aufweist, welche die Lichtstrahlrichtung in Abhängigkeit von einem Steuersignal verändert,
**dadurch gekennzeichnet, daß** das Gerät eine Antenne (17, 18) aufweist und der Lichtstrahl (S) innerhalb des Geräts (1) einen Antennenbereich durchläuft.

2. Gerät nach Anspruch 1,
**dadurch gekennzeichnet, daß** die Bewegungseinrichtung eine Ablenkeinrichtung (4, 5, 6, 14, 15, 16) aufweist, welche den Lichtstrahl (S) in Abhängigkeit von einem Steuersignal ablenkt.

3. Gerät nach Anspruch 2,
**dadurch gekennzeichnet, daß** die Ablenkeinrichtung (4, 5, 6, 14, 15, 16) einen Spiegel (8, 14, 15) aufweist.

4. Gerät nach einem der Ansprüche 2 oder 3,
**dadurch gekennzeichnet, daß** die Ablenkeinrichtung (4) mehrere auf dem Umfang eines um seine Symmetrieachse drehbar gelagerten Rotationskörpers (7) hintereinander angeordnete Spiegel (8) aufweist.

5. Gerät nach Anspruch 4,
**dadurch gekennzeichnet, daß** die Ablenkeinrichtung (4) mit dem Rotationskörper (7) derart ausgestaltet ist, daß bei einer schnellen periodischen Drehrichtungsänderung des Rotationskörpers (7) das Gerät (1) in Vibrationsbewegungen versetzt wird.

6. Gerät nach einem der Ansprüche 2 bis 5,
**dadurch gekennzeichnet, daß** die Ablenkeinrichtung (6) einen Chip (9) mit einem integrierten Ablenkelement (11) aufweist.

7. Gerät nach einem der vorstehenden Ansprüche, **gekennzeichnet durch** ein optisches Element (12, 13) zur Formung des Lichtstrahls (S) und/oder des Strahlbereichs.

8. Gerät nach einem der vorstehenden Ansprüche,
**dadurch gekennzeichnet, daß** die Lichtquelle (3) einen Halbleiterlaser aufweist.

9. Gerät nach einem der vorstehenden Ansprüche,
**dadurch gekennzeichnet, daß** die Lichtquelle eine Leuchtdiode aufweist.

10. Gerät nach einem der vorstehenden Ansprüche, **gekennzeichnet durch** mehrere Lichtquellen, die Lichtstrahlen mit unterschiedlichen Farben erzeugen.

11. Gerät nach einem der vorstehenden Ansprüche,
**dadurch gekennzeichnet, daß** zumindest Teile (3, 12, 13., 15, 16) des Bildwerfers innerhalb eines Antennenbereichs des Geräts (1) angeordnet sind.

12. Gerät nach Anspruch 11,
**dadurch gekennzeichnet, daß** die Antenne eine integrierte Antenne (18) mit zwei Metallflächen (19, 20) ist und zumindest Teile (3, 12, 15, 16) des Bildwerfers zwischen den Metallflächen (19, 20) angeordnet sind

13. Gerät nach Anspruch 12 ,
**dadurch gekennzeichnet,**
**daß** zumindest eine der Metallflächen (19, 20) eine Durchtrittsöffnung (21, 22) für den Lichtstrahl (S) aufweist.

14. Gerät nach einem der Ansprüche 1 bis 11,
**dadurch gekennzeichnet, daß** die Antenne eine Stabantenne (17) ist und zumindest Teile (12, 13) des Bildwerfers in einem Innenraum der Stabantenne (17) angeordnet sind.

15. Gerät nach Anspruch 14,
**dadurch gekennzeichnet, daß** die Stabantenne (17) eine Durchtrittsöffnung für den Lichtstrahl (S) aufweist.

16. Gerät nach einem der Ansprüche 11 bis 15 ,
**dadurch gekennzeichnet, daß** die Teile (3, 12, 13, 15, 16) des Bildwerfers, die im Antennenbereich angeordnet sind, im wesentlichen nichtleitend sind.

17. Gerät nach einem der Ansprüche 11 bis 16,
**dadurch gekennzeichnet, daß** im Antennenbereich angeordnete, leitende Bestandteile des Bildwerfers im Verhältnis zum Antennenvolumen eine geringe räumliche Ausdehnung aufweisen.

18. Gerät nach einem der vorstehenden Ansprüche, **gekennzeichnet durch** einen Ständer (23) zum Aufstellen des Geräts (1) auf einer Oberfläche (24), so daß eine Austrittsstelle des Lichtstrahls (S) aus einem Gehäuse (10) und/oder einer Antenne (17) des Geräts (1) in einer vorgegebenen Position über der Oberfläche (24) angeordnet ist.

19. Gerät nach einem der vorstehenden Ansprüche, **gekennzeichnet durch** eine zweite Anzeigevorrichtung mit einem in das Gerät (1) integrierten Display.

## Claims

1. Small-scale communication and/or data processing apparatus (1) with an indicating device integrated in the apparatus, the indicating device having an image projector, and the image projector having a light source (3) for generating a light beam (S) and a motion device that varies the light beam direction as a function of a control signal, **characterized in that** the apparatus has an antenna (17, 18), and the light beam (S) traverses an antenna region inside the apparatus (1).

2. Apparatus according to Claim 1, **characterized in that** the motion device has a deflecting device (4, 5, 6, 14, 15, 16) that deflects the light beam (S) as a function of a control signal.

3. Apparatus according to Claim 2, **characterized in that** the deflecting device (4, 5, 6, 14, 15, 16) has a mirror (8, 14, 15).

4. Apparatus according to either of Claims 2 and 3, **characterized in that** the deflecting device (4) has a plurality of mirrors (8) arranged one behind another on the circumference of a solid of revolution (7) mounted in a fashion capable of rotation about its axis of symmetry.

5. Apparatus according to Claim 4, **characterized in that** the deflecting device (4) with the solid of revolution (7) is configured in such a way that the apparatus (1) executes vibratory motions in the event of a fast periodic change in the direction of rotation of the solid of revolution (7).

6. Apparatus according to one of Claims 2 to 5, **characterized in that** the deflecting device (6) has a chip (9) with an integrated deflecting element (11).

7. Apparatus according to one of the preceding claims, **characterized by** an optical element (12, 13) for forming the light beam (S) and/or the beam range.

8. Apparatus according to one of the preceding claims, **characterized in that** the light source (3) has a semiconductor laser.

9. Apparatus according to one of the preceding claims, **characterized in that** the light source has a light-emitting diode.

10. Apparatus according to one of the preceding claims, **characterized by** a plurality of light sources that generate light beams of different colors.

11. Apparatus according to one of the preceding claims, **characterized in that** at least parts (3, 12, 13, 15, 16) of the image projector are arranged inside an antenna region of the apparatus (1).

12. Apparatus according to Claim 11, **characterized in that** the antenna is an integrated antenna (18) with two metal surfaces (19, 20), and at least parts (3, 12, 15, 16) of the image projector are arranged between the metal surfaces (19, 20).

13. Apparatus according to Claim 12, **characterized in that** at least one of the metal surfaces (19, 20) has a passage opening (21, 22) for the light beam (S).

14. Apparatus according to one of Claims 1 to 11 **characterized in that** the antenna is a rod antenna (17), and at least parts (12, 13) of the image projector are arranged in an inner space of the rod antenna (17).

15. Apparatus according to Claim 14, **characterized in that** the rod antenna (17) has a passage opening for the light beam (S).

16. Apparatus according to one of Claims 11 to 15, **characterized in that** the parts (3, 12, 13, 15, 16) of the image projector that are arranged in the antenna region are substantially nonconducting.

17. Apparatus according to one of Claims 11 to 16, **characterized in that** conducting components, arranged in the antenna region, of the image projector have a small spatial extent in relation to the antenna volume.

18. Apparatus according to one of the preceding claims, **characterized by** a stand (23) for setting up the apparatus (1) of a surface (24) such that an exit point for the light beam (S) from a housing (10) and/or an antenna (17) of the apparatus (1) is arranged at a prescribed position above the surface (24).

19. Apparatus according to one of the preceding claims, **characterized by** a second indicating device with the display integrated in the apparatus (1).

## Revendications

1. Petit appareil de communication et/ou de traitement de données (1) comportant un dispositif d'affichage intégré dans l'appareil, dans lequel le dispositif d'affichage comporte un projecteur et dans lequel le projecteur comporte une source lumineuse (3) pour la production d'un rayon lumineux (S) et un dispositif de déplacement qui modifie la direction du rayon lumineux en fonction d'un signal de commande, **caractérisé par le fait que** l'appareil comporte une antenne (17, 18) et que le rayon lumineux (S) traverse à l'intérieur de l'appareil (1) une zone d'antenne.

2. Appareil selon la revendication 1, **caractérisé par le fait que** le dispositif de déplacement comporte un dispositif de déviation (4, 5, 6, 14, 15, 16) qui dévié le rayon lumineux (S) en fonction d'un signal de commande.

3. Appareil selon la revendication 2, **caractérisé par le fait que** le dispositif de déviation (4, 5, 6, 14, 15, 16) comporte un miroir (8, 14, 15).

4. Appareil selon l'une des revendications 2 ou 3, **caractérisé par le fait que** le dispositif de déviation (4) comporte plusieurs miroirs (8) disposés les uns derrière les autres sur la périphérie d'un corps rotatif (7) monté rotatif autour de son axe de symétrie.

5. Appareil selon la revendication 4, **caractérisé par le fait que** le dispositif de déviation (4) est conçu comme un corps rotatif (7) de telle sorte que, lors d'une variation périodique rapide du sens de rotation du corps rotatif (7), l'appareil (1) est mis en vibration.

6. Appareil selon l'une des revendications 2 à 5, **caractérisé par le fait que** le dispositif de déviation (6) comporte une puce (9) avec un élément de déviation intégré (11).

7. Appareil selon l'une des revendications précédentes, **caractérisé par** un élément optique (12, 13) pour la mise en forme du rayon lumineux (S) et/ou de la zone de rayonnement.

8. Appareil selon l'une des revendications précédentes, **caractérisé par le fait que** la source lumineuse (3) comporte un laser à semi-conducteur.

9. Appareil selon l'une des revendications précédentes, **caractérisé par le fait que** la source lumineuse comporte une diode luminescente.

10. Appareil selon l'une des revendications précédentes, **caractérisé par** plusieurs sources lumineuses qui produisent des rayons lumineux de différentes couleurs.

11. Appareil selon l'une des revendications précédentes, **caractérisé par le fait qu'**au moins des parties (3, 12, 13, 15, 16) du projecteur sont placées à l'intérieur d'une zone d'antenne de l'appareil (1).

12. Appareil selon la revendication 11, **caractérisé par le fait que** l'antenne est une antenne intégrée (18) avec deux surfaces métalliques (19, 20) et qu'au moins des parties (3, 12, 15, 16) du projecteur sont placées entre les surfaces métalliques (19, 20).

13. Appareil selon la revendication 12, **caractérisé par le fait qu'**au moins l'une des surfaces métalliques (19, 20) comporte un orifice de traversée (21, 22) pour le rayon lumineux (S).

14. Appareil selon l'une des revendications 1 à 11, **caractérisé par le fait que** l'antenne est une antenne tige (17) et qu'au moins des parties (12, 13) du projecteur sont placées à l'intérieur de l'antenne tige (17).

15. Appareil selon la revendication 14, **caractérisé par le fait que** l'antenne tige (17) comporte un orifice de traversée pour le rayon lumineux (S).

16. Appareil selon l'une des revendications 11 à 15, **caractérisé par le fait que** les parties (3, 12, 13, 15, 16) du projecteur qui sont placées dans la zone d'antenne sont globalement non conductrices.

17. Appareil selon l'une des revendications 11 à 16, **caractérisé par le fait que** des parties conductrices du projecteur qui sont placées dans la zone d'antenne ont une dimension spatiale petite par rapport au volume d'antenne.

18. Appareil selon l'une des revendications précédentes, **caractérisé par** un support (23) pour poser l'appareil (1) sur une surface (24) de telle sorte qu'un point de sortie du rayon lumineux (S) hors d'un boîtier (10) et/ou d'une antenne (17) de l'appareil (1) est placé dans une position prédéterminée au-dessus de la surface (24).

19. Appareil selon l'une des revendications précédentes, **caractérisé par** un deuxième dispositif d'affichage avec un affichage intégré dans l'appareil (1).
